# DEMANDE DE BREVET EUROPEEN

(11) **EP 4 446 918 A1**
(43) Date de publication de la demande: **16.10.2024**
(21) Numéro de dépôt: 23305547.4
(22) Date de dépôt: 12.04.2023
(51) Int. Cl.: G06F 21/57, G06F 21/64, G06N 3/08, G06N 20/00, H04L 9/40

(54) **PLATEFORME SECURISÉE DE TRAITEMENT DE DONNÉES**

(71) Demandeur: ATOS FRANCE, 95870 Bezons (FR)
(72) Inventeur: LECROART, Yannick, 34280 La Grande Motte (FR); AYOUBI, Kamal, 34070 Montpellier (FR); MAISONNASSE, Loïc, 34130 Mauguio (FR)
(74) Mandataire: Novagraaf Technologies

(57) **Abrégé**

L'invention concerne une plateforme (2) de traitement de données comprenant un serveur de calcul (10) et un serveur de conformité (12) distincts l'un de l'autre,
le serveur de calcul (10) étant configuré pour recevoir un flux de données (4) depuis au moins une source (6) et pour :
- exécuter, sur la base du flux de données (4), un processus (16) de traitement de données comprenant au moins une tâche (20) ; et
- à chaque exécution d'une tâche (20), émettre, vers le serveur de conformité (12), une requête (21) comprenant des données contextuelles représentatives d'un contexte d'exécution de la tâche,

le serveur de conformité (12) étant configuré pour :
- charger, depuis une chaîne de blocs (18), des données de conformité (26) préétablies ;
- comparer les données contextuelles reçues avec les données de conformité (26) chargées ;
- générer une alerte en fonction d'un résultat de la comparaison.

## Description

### État de la technique

La présente invention concerne une plateforme de traitement de données.

L'invention s'applique au domaine des objets connectés, et en particulier au traitement des données fournies par de tels objets connectés.

### État de la technique

Dans le domaine de l'intelligence artificielle, il est connu de mettre en oeuvre des stratégies de sécurisation des applications et des plateformes d'apprentissage automatique, en vue de se prémunir d'attaques.

En particulier, il est connu de sécuriser un canal de communication par lequel des requêtes de traitement de données (telles que des demandes de prédiction) sont envoyées à destination d'un serveur mettant en oeuvre un modèle d'intelligence artificielle préalablement entraîné pour répondre à de telles requêtes.

Néanmoins, une telle stratégie de sécurisation n'est pas entièrement satisfaisante.

En effet, une telle stratégie de sécurisation est peu efficace contre des attaques dites « d'empoisonnement » d'un processus de traitement de données, à travers lesquelles des pirates visent à :
- manipuler des jeux de données d'entraînement du modèle d'intelligence artificielle (empoisonnement de jeu de données), de façon à introduire des biais lors de l'apprentissage, par exemple au moyen de données mal étiquetées ou volontairement modifiées/faussées ;
- altérer l'algorithme permettant de générer le modèle d'intelligence artificielle (empoisonnement algorithmique), notamment en modifiant des hyperparamètres et/ou une architecture du modèle d'intelligence artificielle, par exemple un nombre de couches d'un réseau de neurones ;
- remplacer le modèle d'intelligence artificielle déployé au niveau du serveur, dit « en production », par un autre (empoisonnement de modèle), en modifiant des fichiers de configuration et de déploiement spécifiant une version du modèle d'intelligence artificielle à déployer en production.

Un but de la présente invention est de remédier à au moins un des inconvénients de l'état de la technique.

Un autre but de l'invention est de proposer une plateforme de traitement de données qui soit moins vulnérable face à de telles attaques.

### Exposé de l'invention

À cet effet, l'invention concerne une plateforme de traitement de données du type précité, comprenant un port d'entrée pour recevoir un flux de données depuis au moins une source, un serveur de calcul et un serveur de conformité,
le serveur de calcul et le serveur de conformité étant distincts l'un de l'autre et en communication l'un avec l'autre, le serveur de calcul étant connecté au port d'entrée et le serveur de conformité n'étant pas connecté au port d'entrée,
le serveur de calcul étant configuré pour :
   - exécuter, sur la base du flux de données reçu, un processus de traitement de données comprenant au moins une tâche ; et
   - émettre à destination du serveur de conformité, à chaque exécution d'une tâche du processus de traitement de données, une requête comprenant des données contextuelles représentatives d'un contexte d'exécution de la tâche,
le serveur de conformité étant configuré pour :
   - charger, depuis une chaîne de blocs, des données de conformité préétablies ; et
   - comparer les données contextuelles reçues depuis le serveur de calcul avec les données de conformité chargées depuis la chaîne de blocs ;
   - générer une alerte en fonction d'un résultat de la comparaison.

En effet, grâce à une telle plateforme, chaque tâche du processus de traitement de données est soumise à un contrôle du contexte dans lequel elle a été exécutée. En d'autres termes, le serveur de conformité est destiné à vérifier que le contexte d'exécution de chaque tâche du processus de traitement de données (en particulier les données d'entraînement utilisées, les paramètres du modèle d'intelligence artificielle mis en oeuvre, ou encore le modèle d'intelligence artificielle en production) concordent avec des données de conformité préalablement établies, par exemple par un administrateur.

En outre, le stockage des données de conformité au niveau d'une chaîne de blocs, c'est-à-dire la décentralisation des données de conformité vers un registre de confiance, garantit l'authenticité des données de conformité et leur intégrité dans le temps.

Par ailleurs, le serveur de conformité n'étant pas connecté au port d'entrée, il est moins susceptible d'être la cible d'attaques.

De cette façon, grâce à l'invention, l'identité des acteurs, l'intégrité des données et des actions réalisées au cours de chaque tâche du processus de traitement de données sont assurées, et des tentatives d'empoisonnement sont empêchées.

De façon avantageuse, la plateforme de traitement de données présente une ou plusieurs des caractéristiques suivantes, prises isolément ou selon toute combinaison techniquement possible :
le serveur de calcul est configuré pour stocker au moins un modèle d'intelligence artificielle, l'au moins une tâche du processus de traitement de données comportant un entraînement de l'au moins un modèle d'intelligence artificielle sur la base de données d'entraînement dépendant du flux de données reçu ;
le serveur de calcul est configuré pour stocker au moins un modèle d'intelligence artificielle préalablement entraîné, l'au moins une tâche du processus de traitement de données comportant un traitement, par l'au moins un modèle d'intelligence artificielle préalablement entraîné, de données brutes dépendant du flux de données reçu ;
le serveur de conformité est configuré pour commander, en cas de discordance entre les données contextuelles reçues depuis le serveur de calcul et les données de conformité chargées, une interruption de l'exécution du processus de traitement de données par le serveur de calcul ;
le serveur de conformité est configuré pour enregistrer, dans la chaîne de blocs, une information de conformité représentative d'une situation où, pour chacune des tâches du processus de traitement, le serveur de conformité a déterminé une concordance des données contextuelles correspondantes avec les données de conformité chargées ;
l'information de conformité comprend un horodatage et/ou une signature électronique du serveur de conformité ;
les données de conformité comprennent, pour chaque tâche, une description :
   - des données d'entrée acceptables pour l'exécution de la tâche ;
   - des commandes acceptables pour l'exécution de la tâche ;
   - des règles relatives à des actions acceptables lors de l'exécution de la tâche ;
   - des étapes acceptables pour l'exécution de la tâche ; et/ou
   - des acteurs autorisés à exécuter la tâche ;
pour chaque tâche, les données contextuelles comprennent une description :
   - des données d'entrée mises en oeuvre lors de l'exécution de la tâche ;
   - des commandes mises en oeuvre lors de l'exécution de la tâche ;
   - des actions réalisées lors de l'exécution de la tâche ;
   - des étapes mises en oeuvre lors de l'exécution de la tâche ; et/ou
   - des acteurs ayant exécuté la tâche ;
les données de conformité sont associées à une date d'expiration, le serveur de conformité étant configuré pour comparer les données contextuelles reçues avec les données de conformité chargées uniquement si une date courante est antérieure à la date d'expiration ;
le serveur de calcul est configuré pour exécuter le processus de traitement de données en réponse à une réception d'une demande de traitement de données issue d'un agent externe, le serveur de calcul étant, en outre, configuré pour rejeter une demande de traitement de données si, au cours d'un premier intervalle de temps prédéterminé jusqu'à une date courante, un nombre total de demandes de traitement de données reçues est supérieur à un premier seuil prédéterminé ;
le serveur de conformité est configuré pour rejeter une requête provenant du serveur de calcul si, au cours d'un deuxième intervalle de temps prédéterminé jusqu'à une date courante, un nombre total de requêtes reçues depuis le serveur de calcul est supérieur à un deuxième seuil prédéterminé.

### Brève description des figures

L'invention sera mieux comprise à la lecture de la description qui va suivre, donnée uniquement à titre d'exemple non limitatif et faite en se référant au dessin annexé sur lequel :

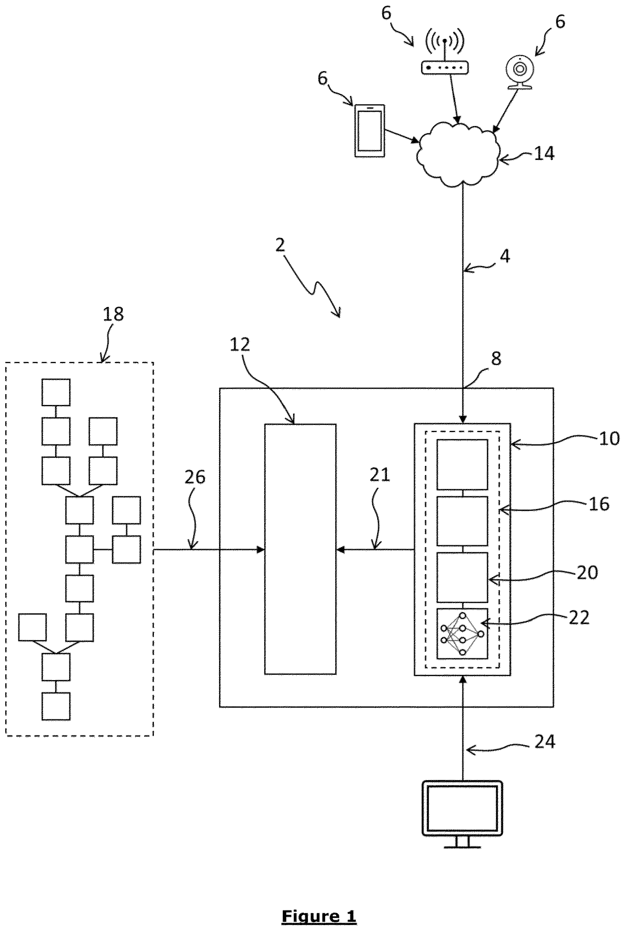

la figure 1 est une représentation schématique d'une plateforme de traitement de données selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

Une plateforme 2 de traitement de données (appelée « plateforme de traitement » par la suite) selon l'invention est illustrée par la figure 1.

La plateforme de traitement 2 est destinée au traitement d'un flux de données 4 provenant d'au moins une source 6.

De façon non limitative, une telle source 6 est un objet connecté. Selon un autre exemple, une telle source 6 est une mémoire stockant des données à traiter. Selon encore un autre exemple, une telle source est un terminal utilisateur par l'intermédiaire duquel un utilisateur fournit des données et/ou un paramétrage à la plateforme de traitement 2.

La plateforme de traitement 2 comprend un port d'entrée 8, un serveur de calcul 10 et un serveur de conformité 12.

Le port d'entrée 8 est destiné à être connecté à chaque source 6, notamment à travers un réseau de communication 14, pour recevoir le flux de données 4.

Comme illustré par la figure 1, le serveur de calcul 10 et le serveur de conformité 12 sont distincts l'un de l'autre et en communication l'un avec l'autre. En outre, le serveur de calcul 10 est connecté au port d'entrée 8, tandis que le serveur de conformité 12 n'est pas connecté au port d'entrée 8.

Le serveur de calcul 10 est configuré pour recevoir le flux de données 4 depuis le port d'entrée 8 et pour exécuter un processus 16 de traitement de données (appelé « processus de traitement » par la suite) sur la base du flux de données 4 reçu. Un tel processus de traitement 16 comprend au moins une tâche 20.

En outre, le serveur de conformité 12 est configuré pour vérifier que l'exécution du processus de traitement 16 est conforme à des critères préétablis. En particulier, le serveur de conformité 12 est configuré pour vérifier que l'exécution de chaque tâche 20 est conforme aux critères préétablis.

De tels critères, qui seront plus amplement décrits par la suite, ont, notamment, été préalablement établis par un propriétaire de produit (en anglais, « *project manager* »), un service de sécurité, ou toute autre personne ou entité disposant d'un niveau d'accréditation suffisant, et appelée par la suite « administrateur ». En outre, de tels critères sont stockés dans une chaîne de blocs 18 pour former des données de conformité. En particulier, les données de conformité ont été enregistrées dans la chaîne de blocs 18 par le biais d'une transaction dans laquelle sont encodées et cryptées les données de conformité.

Le serveur de conformité 12 est configuré pour communiquer avec la chaîne de blocs 18.

L'un au moins du serveur de calcul 10 et du serveur de conformité 12 est susceptible de se présenter sous une forme matérielle, tel qu'un ordinateur, un serveur, un processeur, une puce électronique, etc. Alternativement, ou de façon additionnelle, l'un au moins du serveur de calcul 10 et du serveur de conformité 12 est susceptible de se présenter sous une forme logicielle tel qu'un programme d'ordinateur, ou une application, par exemple une application pour un appareil utilisateur de type tablette ou téléphone intelligent (« *smartphone »* en anglais).

### Serveur de calcul 10

Comme indiqué précédemment, le serveur de calcul 10 est configuré pour recevoir le flux de données 4 depuis le port d'entrée 8 et pour exécuter le processus de traitement 16 sur la base du flux de données 4 reçu.

De préférence, le serveur de calcul 10 est configuré pour exécuter le processus de traitement 16 en réponse à une réception d'une demande 24 de traitement de données. Une telle demande 24 de traitement de données provient d'un agent externe (c'est-à-dire externe à et distinct de la plateforme de traitement 2), par exemple un utilisateur de la plateforme de traitement 2.

Dans ce cas, le serveur de calcul 10 est avantageusement configuré pour rejeter une demande 24 de traitement de données si, au cours d'un premier intervalle de temps prédéterminé jusqu'à une date courante, un nombre total de demandes 24 de traitement de données reçues est supérieur à un premier seuil prédéterminé.

Par « rejeter la demande de traitement », il est entendu, au sens de la présente invention, ne pas déclencher l'exécution du processus de traitement en réponse à la réception de ladite demande de traitement.

Une telle caractéristique est avantageuse, dans la mesure où elle réduit le risque de voir aboutir une attaque par déni de service (ou « *denial-of-service attack »* en anglais) réalisé par un agent externe malveillant.

De préférence, le serveur de calcul 10 est configuré pour stocker au moins un modèle d'intelligence artificielle 22. Dans ce cas, au moins une tâche 20 du processus de traitement 16 comporte un entraînement de l'au moins un modèle d'intelligence artificielle 22 sur la base de données dépendant du flux de données 4 (dites « données d'entraînement »). Plus précisément, les données d'entraînement comportent tout ou partie du flux de données 4, ou sont obtenues à partir du flux de données 4, à l'issue de l'exécution d'une ou de plusieurs tâches 20 antérieures du processus de traitement 16.

Alternativement, ou de façon complémentaire, le serveur de calcul 10 est configuré pour stocker au moins un modèle d'intelligence artificielle 22 préalablement entraîné. Dans ce cas, au moins une tâche 20 du processus de traitement 16 comporte un traitement, par le modèle d'intelligence artificielle 20 entraîné, de données dépendant du flux de données 4 (dites « données brutes »). Plus précisément, les données brutes comprennent tout ou partie du flux de données 4, ou sont obtenues à partir du flux de données 4, à l'issue de l'exécution d'une ou de plusieurs tâches 20 précédentes du processus de traitement 16.

Par exemple, l'au moins un modèle d'intelligence artificielle entraîné est le résultat d'un entraînement mis en oeuvre au cours d'une tâche 20 précédente du processus de traitement 16.

En outre, le serveur de calcul 10 est configuré pour émettre, à destination du serveur de conformité 12, une requête 21 à chaque exécution d'une tâche 20 du processus de traitement 16. Pour chaque tâche 20 exécutée, la requête 21 comprend des données contextuelles représentatives d'un contexte d'exécution de la tâche 20.

De préférence, les données contextuelles comprennent une description des données d'entrée mises en oeuvre lors de l'exécution de la tâche 20, c'est-à-dire les données sur la base desquelles la tâche 20 a été exécutée. Par exemple, de telles données d'entrée comprennent les données d'entraînement utilisées pour l'entraînement d'un modèle d'intelligence artificielle, ou encore les paramètres du modèle d'intelligence artificielle mis en oeuvre.

Alternativement, ou de façon complémentaire, les données contextuelles comprennent une description des données de sortie obtenues à l'issue de l'exécution de la tâche 20.

Alternativement, ou de façon complémentaire, les données contextuelles comprennent une description des commandes mises en oeuvre lors de l'exécution de la tâche 20. De telles commandes sont, par exemple, des fonctions logicielles appelées lors de l'exécution de la tâche 20, telles qu'un modèle d'intelligence artificielle entraîné utilisé pour l'exécution de la tâche 20.

Alternativement, ou de façon complémentaire, les données contextuelles comprennent une description des actions mises en oeuvre lors de l'exécution de la tâche 20. De telles actions comprennent, par exemple, la génération d'un fichier, la suppression d'un fichier, ou encore la modification d'un fichier lors de l'exécution de la tâche 20. Par exemple, dans le cas de la génération d'un fichier, la description des actions comprend un emplacement du fichier généré.

Alternativement, ou de façon complémentaire, les données contextuelles comprennent une description des étapes mises en oeuvre lors de l'exécution de la tâche 20.

Alternativement, ou de façon complémentaire, les données contextuelles comprennent une description des acteurs ayant exécuté la tâche, c'est-à-dire une description des machines ou grappes de machines, physiques ou virtuelles, ayant exécuté la tâche 20. En outre, une telle description des acteurs ayant exécuté la tâche 20 comporte, par exemple, un identifiant unique de chaque acteur, ou encore une signature électronique de chaque acteur.

Les données contextuelles sont, par exemple, enregistrées dans un fichier au format JSON comprenant une pluralité de champs sous forme de clés-valeurs dans lesquelles sont indiquées chacune des données contextuelles.

### Serveur de conformité 12

Comme indiqué précédemment, le serveur de conformité 12 est destiné à vérifier que l'exécution du processus de traitement 16 est conforme aux critères préétablis. Plus précisément, le serveur de conformité 12 est configuré pour vérifier que l'exécution de chaque tâche 20 du processus de traitement 16 est conforme aux critères préétablis, stockés sous forme de données de conformité 26 dans la chaîne de blocs 18.

Pour ce faire, le serveur de conformité 12 est configuré pour charger, depuis la chaîne de blocs 18, les données de conformité 26 préétablies. En particulier, le serveur de conformité 12 est configuré pour chargé les données de conformité 26 à l'aide d'un numéro de bloc ou d'une valeur de hachage relative à l'enregistrement préalable des données de conformité 26 dans la chaîne de blocs 18.

De préférence, pour chaque tâche 20 du processus de traitement 16, les données de conformité 26 comprennent une description des données d'entrée acceptables pour l'exécution de la tâche 20.

Alternativement, ou de façon complémentaire, les données de conformité 26 comprennent, pour chaque tâche 20, une description des données de sortie acceptables à l'issue de l'exécution de la tâche 20.

Alternativement, ou de façon complémentaire, les données de conformité 26 comprennent, pour chaque tâche 20, une liste des commandes acceptables pour l'exécution de la tâche 20.

Alternativement, ou de façon complémentaire, les données de conformité 26 comprennent, pour chaque tâche 20, des règles relatives à des actions acceptables lors de l'exécution de la tâche 20.

Alternativement, ou de façon complémentaire, les données de conformité 26 comprennent, pour chaque tâche 20, une liste des étapes acceptables pour l'exécution de la tâche 20.

Alternativement, ou de façon complémentaire, les données de conformité 26 comprennent, pour chaque tâche 20, une liste des acteurs autorisés à exécuter la tâche 20.

Les données de conformité 26 sont, par exemple, enregistrées dans un fichier au format JSON (acronyme de l'expression anglaise « *JavaScript Object Notation* ») comprenant une pluralité de champs sous forme de clés-valeurs dans lesquelles sont indiqués chacun des critères préétablis.

Avantageusement, les données de conformité 26 sont signés électroniquement par l'administrateur, afin de garantir l'authenticité desdites données de conformité 26.

De façon optionnelle, les données de conformité 26 sont associées à une date d'expiration.

Pour vérifier que l'exécution du processus de traitement 16 est conforme aux critères préétablis, le serveur de conformité 12 est configuré pour comparer, pour chaque étape 20, les données contextuelles correspondantes reçues depuis le serveur de calcul 10 avec les données de conformité 26 chargées depuis la chaîne de blocs 18.

Avantageusement, dans le cas où les données de conformité 26 sont associées à une date d'expiration, le serveur de conformité 12 est configuré pour comparer les données contextuelles avec les données de conformité 26 uniquement si une date courante est antérieure à la date d'expiration. De cette façon, il est assuré que les données de conformité 26 sur la base desquelles va être évaluée l'exécution du processus de traitement 16 sont toujours en cours de validité.

Avantageusement, pour chaque tâche 20 du processus de traitement 16 exécutée par le serveur de calcul 10, le serveur de conformité 12 est configuré pour enregistrer un résultat de la comparaison des données contextuelles correspondantes avec les données de conformité 26 chargées. Par exemple, le serveur de conformité 12 est configuré pour enregistrer le résultat de la comparaison dans une base de données d'audit.

Une telle caractéristique est avantageuse, dans la mesure où elle autorise une restitution dans un outil de visualisation d'interactions de conformité, notamment une restitution en temps réel.

En outre, le serveur de conformité est configuré pour générer une alerte en fonction d'un résultat de la comparaison.

En particulier, pour chaque tâche 20, le serveur de conformité est configuré pour générer une alerte en cas de discordance entre les données contextuelles correspondantes reçues depuis le serveur de calcul 10 et les données de conformité 26 chargées depuis la chaîne de blocs 18.

Une telle alerte est, par exemple, destinée à un administrateur de la plateforme de traitement 2.

Avantageusement, en cas de discordance entre les données contextuelles reçues depuis le serveur de calcul 10 pour une tâche 20 donnée quelconque et les données de conformité 26 chargées, le serveur de conformité 12 est également configuré pour commander une interruption de l'exécution du processus de traitement 16 par le serveur de calcul 10.

Ceci est avantageux, dans la mesure où elle renforce la sécurité de la plateforme de traitement 2, une telle discordance entre les données contextuelles et les données de conformité 26 constituant une suspicion d'attaque. De cette façon, un impact d'une attaque d'empoisonnement est limité.

Avantageusement, le serveur de conformité est, en outre, configuré pour enregistrer, dans la chaîne de blocs 18, une information de conformité représentative d'une situation où, pour chacune des tâches 20 du processus de traitement 16, le serveur de conformité 12 a déterminé une concordance des données contextuelles correspondantes avec les données de conformité 26 chargées.

De cette façon, l'information de conformité est infalsifiable.

De préférence, une telle information de conformité comprend un horodatage et/ou une signature électronique du serveur de conformité 12.

Avantageusement, le serveur de conformité 12 est configuré pour rejeter une requête provenant du serveur de calcul 10 si, au cours d'un deuxième intervalle de temps prédéterminé jusqu'à une date courante, un nombre total de requêtes reçues depuis le serveur de calcul est supérieur à un deuxième seuil prédéterminé.

Une telle caractéristique est avantageuse, dans la mesure où elle est amène le serveur de conformité 12 à se prémunir contre des attaques, notamment des attaques par déni de service, provenant du serveur de calcul 10 et/ou d'acteurs qui seraient autorisés, au regard de la définition du processus de traitement 16, à intervenir dans une ou plusieurs tâche(s) dudit processus de traitement 16. Une telle attaque par déni de service pourrait, par exemple, viser à surcharger le serveur de serveur de conformité avec des requêtes d'inspection et/ou d'authentification.

### Fonctionnement

Le fonctionnement de la plateforme de traitement 2 va maintenant être décrit.

Au cours d'une étape de configuration, un administrateur configure la plateforme de traitement 2 pour définir le processus de traitement 16 à exécuter, en particulier chaque tâche 20 du processus de traitement 16.

En outre, l'administrateur définit des critères selon lesquels l'exécution du processus de traitement 16 (notamment de chaque tâche 20) est considérée comme conforme.

Puis, l'administrateur enregistre lesdits critères dans la chaîne de blocs 18, pour former les données de conformité 26.

Puis, la plateforme de traitement 2 est connectée à chaque source 6 pour recevoir, au niveau de son port d'entrée 8, le flux de données 4, qui est routé vers le serveur de calcul 10.

En outre, le serveur de conformité 12 charge, depuis la chaîne de blocs 18, les données de conformité 26.

Puis, le serveur de calcul 10 exécute le processus de traitement 16, sur la base du flux de données 4, de préférence en réponse à une demande 24 de traitement de données reçue depuis un agent externe à la plateforme de traitement 2.

Durant la mise en oeuvre du processus de traitement 16, pour chaque tâche 20 exécutée, le serveur de calcul 10 émet, à destination du serveur de conformité 12, une requête 21 comprenant les données contextuelles représentatives du contexte d'exécution de ladite tâche 20.

Pour chaque requête 21 reçue depuis le serveur de calcul 10 (c'est-dire pour chaque tâche 20 exécutée), le serveur de conformité 12 compare les données contextuelles correspondantes avec les données de conformité 26 chargées depuis la chaîne de blocs 18.

Puis, en fonction d'un résultat de la comparaison, le serveur de conformité 12 génère une alerte. En particulier, le serveur de conformité 12 génère une alerte en cas de discordance entre les données contextuelles correspondant à une tâche 20 donnée quelconque et les données de conformité 26 chargées depuis la chaîne de blocs 18.

De préférence, dans le cas d'une telle discordance, le serveur de conformité 12 commande, en outre, une interruption de l'exécution du processus de traitement 16 par le serveur de calcul 10.

Bien entendu l'invention n'est pas limitée aux exemples qui viennent d'être décrits.

## Revendications

1. Plateforme (2) de traitement de données comprenant un port d'entrée (8) pour recevoir un flux de données (4) depuis au moins une source (6), un serveur de calcul (10) et un serveur de conformité (12),
le serveur de calcul (10) et le serveur de conformité (12) étant distincts l'un de l'autre et en communication l'un avec l'autre, le serveur de calcul (10) étant connecté au port d'entrée (8) et le serveur de conformité (12) n'étant pas connecté au port d'entrée (8),
le serveur de calcul (10) étant configuré pour :
- exécuter, sur la base du flux de données (4) reçu, un processus (16) de traitement de données comprenant au moins une tâche (20) ; et
- émettre à destination du serveur de conformité (12), à chaque exécution d'une tâche (20) du processus (16) de traitement de données, une requête (21) comprenant des données contextuelles représentatives d'un contexte d'exécution de la tâche (20),
le serveur de conformité (12) étant configuré pour :
- charger, depuis une chaîne de blocs (18), des données de conformité (26) préétablies ;
- comparer les données contextuelles reçues depuis le serveur de calcul (10) avec les données de conformité (26) chargées depuis la chaîne de blocs (18) ; et
- générer une alerte en fonction d'un résultat de la comparaison.

2. Plateforme (2) de traitement de données selon la revendication 1, dans laquelle le serveur de calcul (10) est configuré pour stocker au moins un modèle d'intelligence artificielle, l'au moins une tâche (20) du processus (16) de traitement de données comportant un entraînement de l'au moins un modèle d'intelligence artificielle sur la base de données d'entraînement dépendant du flux de données (4) reçu.

3. Plateforme (2) de traitement de données selon la revendication 1 ou 2, dans laquelle le serveur de calcul (10) est configuré pour stocker au moins un modèle d'intelligence artificielle préalablement entraîné, l'au moins une tâche (20) du processus (16) de traitement de données comportant un traitement, par l'au moins un modèle d'intelligence artificielle préalablement entraîné, de données brutes dépendant du flux de données (4) reçu.

4. Plateforme (2) de traitement de données selon l'une quelconque des revendications 1 à 3, dans laquelle le serveur de conformité (12) est configuré pour commander, en cas de discordance entre les données contextuelles reçues depuis le serveur de calcul (10) et les données de conformité (26) chargées, une interruption de l'exécution du processus (16) de traitement de données par le serveur de calcul (10).

5. Plateforme (2) de traitement de données selon l'une quelconque des revendications 1 à 4, le serveur de conformité (12) est configuré pour enregistrer, dans la chaîne de blocs (18), une information de conformité représentative d'une situation où, pour chacune des tâches (20) du processus de traitement (16), le serveur de conformité (12) a déterminé une concordance des données contextuelles correspondantes avec les données de conformité (26) chargées.

6. Plateforme (2) de traitement de données selon la revendication 5, dans laquelle l'information de conformité comprend un horodatage et/ou une signature électronique du serveur de conformité (12).

7. Plateforme (2) de traitement de données selon l'une quelconque des revendications 1 à 6, dans laquelle les données de conformité (26) comprennent, pour chaque tâche (20), une description :
- des données d'entrée acceptables pour l'exécution de la tâche (20) ;
- des commandes acceptables pour l'exécution de la tâche (20) ;
- des règles relatives à des actions acceptables lors de l'exécution de la tâche (20) ;
- des étapes acceptables pour l'exécution de la tâche (20) ; et/ou
- des acteurs autorisés à exécuter la tâche (20).

8. Plateforme (2) de traitement de données selon l'une quelconque des revendications 1 à 7, dans laquelle, pour chaque tâche (20), les données contextuelles comprennent une description :
- des données d'entrée mises en oeuvre lors de l'exécution de la tâche (20) ;
- des commandes mises en oeuvre lors de l'exécution de la tâche (20) ;
- des actions réalisées lors de l'exécution de la tâche (20) ;
- des étapes mises en oeuvre lors de l'exécution de la tâche (20) ; et/ou
- des acteurs ayant exécuté la tâche (20).

9. Plateforme (2) de traitement de données selon l'une quelconque des revendications 1 à 8, dans laquelle les données de conformité (26) sont associées à une date d'expiration, le serveur de conformité (12) étant configuré pour comparer les données contextuelles reçues avec les données de conformité (26) chargées uniquement si une date courante est antérieure à la date d'expiration.

10. Plateforme (2) de traitement de données selon l'une quelconque des revendications 1 à 9, dans laquelle le serveur de calcul (10) est configuré pour exécuter le processus (16) de traitement de données en réponse à une réception d'une demande (24) de traitement de données issue d'un agent externe,
le serveur de calcul (10) étant, en outre, configuré pour rejeter une demande (24) de traitement de données si, au cours d'un premier intervalle de temps prédéterminé jusqu'à une date courante, un nombre total de demandes (24) de traitement de données reçues est supérieur à un premier seuil prédéterminé.

11. Plateforme (2) de traitement de données selon l'une quelconque des revendications 1 à 10, dans laquelle le serveur de conformité (12) est configuré pour rejeter une requête (21) provenant du serveur de calcul (10) si, au cours d'un deuxième intervalle de temps prédéterminé jusqu'à une date courante, un nombre total de requêtes (21) reçues depuis le serveur de calcul (10) est supérieur à un deuxième seuil prédéterminé.
